Europäisches Patentamt

(19) European Patent Office          (11) Publication number:          **0 125 324**

Office européen des brevets          **B1**

(12)          **EUROPEAN PATENT SPECIFICATION**

(45) Date of publication of patent specification: **15.10.86**          (51) Int. Cl.⁴: **F 28 F 9/00,** G 21 C 3/34

(21) Application number: **83104719.6**

(22) Date of filing: **13.05.83**

(54) **Tube support grid.**

(43) Date of publication of application:
**21.11.84 Bulletin 84/47**

(45) Publication of the grant of the patent:
**15.10.86 Bulletin 86/42**

(84) Designated Contracting States:
**BE DE FR GB IT SE**

(56) References cited:
**EP-A-0 025 395**
**DE-A-2 751 744**
**FR-A-2 457 544**
**FR-A-2 459 441**
**US-A-3 314 860**
**US-A-3 379 617**
**US-A-4 036 461**
**US-A-4 090 918**

(73) Proprietor: **WESTINGHOUSE ELECTRIC
CORPORATION
Westinghouse Building Gateway Center
Pittsburgh Pennsylvania 15222 (US)**

(72) Inventor: **Wepfer, Robert Mackness
465 A Peebles Street
Pittsburgh Pennsylvania (US)**

(74) Representative: **Patentanwälte Dipl.-Ing. R.
Holzer Dipl.-Ing. (FH) W. Gallo
Philippine-Welser-Strasse 14
D-8900 Augsburg (DE)**

Courier Press, Leamington Spa, England.

## Description

This invention relates to tube support grids for a heat exchanger and more particularly to a tube support grid for a nuclear steam generator.

During the operation of steam generators, if the water chemistry deviates from narrow limits due to such problems as condenser leaks, corrosion of the tubing and the tubing supports it is likely to take place in the vicinity of the contact therebetween. In a grid-type support, the relatively large difference in curvature between the tube and the support at the contact location should tend to inhibit the accumulation of chemical contaminants which lead to corrosion, however, the possibility of such an accumulation is not entirely precluded. The corrosion process has in the past led to deformation of the tubing and of the support structure as a result of the volumetric expansion of the products of corrosion denting the tubing and weakening the support structure.

It is known to employ spring-type supports for tubes or rods. Further springs welded to a bar or slotted tubes as spacers or rings which make point contact with fuel rods are known. There are also arrangements known in which the support assembly is assembled during the process of installing the tubes. But some constructions do not provide sufficient compliance of the supporting surfaces to prevent tube denting while others that have compliant support surface have a large amount of welding therein.

It is the principal object of the present invention to provide a support structure for steam generator tubes which firmly supports the tubes so as to prevent vibration of the tubes but does not have the disadvantages of the prior art tube support structures.

With this object in view, the present invention resides in a tube support grid for supporting a plurality of closely packed tubes, said tube support grid comprising a first set and a second set of generally parallel interleaved flat bars disposed at an angle with respect to one another, said bars having resilient offset portions which are disposed to permit contact with the tubes and stiff offset portions which project in opposite directions and are disposed to permit contact with the tubes, said offset portions being so arranged that the stiff and resilient offset portions are generally disposed on opposite sides of the tubes, each set of bars also having slots adapted to receive the other set of bars, characterised in that at least one ring extends around said sets of bars and is provided with slots disposed to receive the ends of said flat bars, said ends of said flat bars being captured in said slots in said ring to form the tube support grid, and in that the resilient offset portions are adjacent one of the longitudinal margins of each of the bars and the stiff offset portions are inboard with respect to said longitudinal margins of the bars, said resilient offset portions being disposed to extend from a common stem in opposite directions forming a short "T" with the ends of the resilient portion and being offset in opposite directions from the bars, said bars being disposed at the points of intersection of said first and second sets of interleaved flat bars and being received in the slots of the intersecting flat bar, and said slots extending into said one longitudinal margin of each bar only to a limited extent such that the resilient and stiff offset portions of the intersecting bars are essentially in a plane while the other longitudinal margins of said flat bars project from said grid in opposite directions.

The combination of pre-characterizing features is already known from FR—A—2 457 544 disclosing a support grid for supporting fuel rods of a nuclear fuel assembly. A ring extending around two sets of interleaved bars of a support grid for steam generator tubes is already known per se from US—A—4 036 461.

The invention will become more readily apparent from the following description of a preferred embodiment thereof shown, by way of example only, in the accompanying drawings, in which:

Figure 1 is a partial isometric view of a tube support grid made in accordance with this invention;

Figure 2 is a partial isometric view of a bar utilized to form the grid;

Figure 3 is a plan view of a portion of an alternative tube support grid; and

Figure 4 is a partial exploded isometric view of the bars utilizes to form the grid shown in Figure 3.

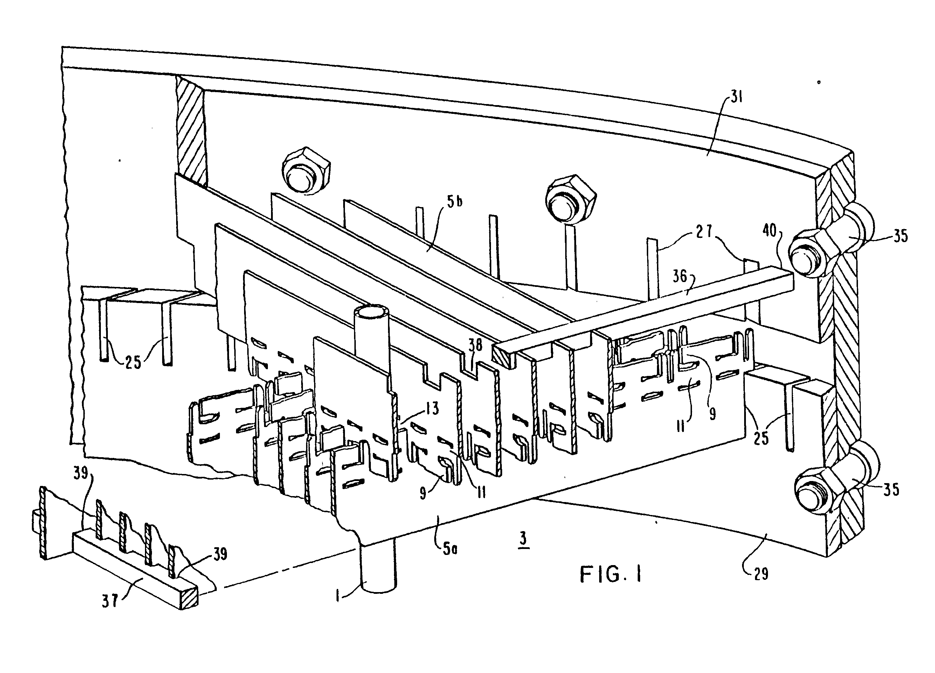

Referring now to the drawings in detail, and in particular to Figure 1, there is shown a tube 1 supported by a tube support grid 3 comprising a first set of generally parallel flat bars 5a and a second set of generally parallel bars 5b disposed normal with respect to each other.

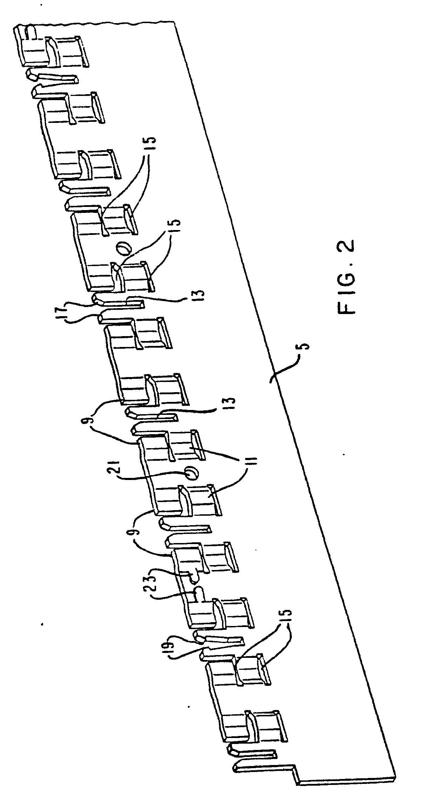

As shown best in Figure 2, the bars 5 are punched so as to shear portions thereof and upset or offset other portions to produce a plurality of resilient offset portions 9 which are formed to resemble a small cantilevered beam and stiff offset portions 11 which are formed to resemble small beams restrained at both ends. Deep slots 13 are also formed in the bars 5 on a double pitch allowing the sets of parallel bars 5a and 5b to be assembled into an eggerate-shaped grid with a plurality of square-shaped enclosures 15. The resilient and offset portions 9 and 11 are so disposed that each separate enclosure 13 formed by the intersecting set of parallel bars 5a and 5b has four offset portions extending into the enclosure 15, two of which are resilient and two of which are stiff. The resilient and stiff offset portions 9 and 11, respectively, are disposed to oppose each other and on opposite sides of the tubes 1 which pass through the enclosures 15 even though they are disposed at different elevations. It should be noted that the offset portions 9 and 11 are so disposed as to permit contact with the tube passing through the enclosure 15. However, there is sufficient clearance between opposing resilient and stiff offset portions 9 and 11 that a tube 1 may pass therebetween without contacting either offset portion 9 or 11. The cantilevered resilient offset portions 9 are disposed on the margins of the bars 5 and are arranged to form a cross of a "T". The stiff offset portions 11 are aligned with and disposed inboard of the resilient offset portions 9 and are offset in the opposite direction from the adjacent outboard resilient offset portion 9. Punched out clearance holes 15 adjacent the offset portions 9 and 11 make offsetting easier.

The slots 12 have chamfered walls as indicated at 17 adjacent the margins of the bars 5. The chamfers 17 provide an angle lead-in to assist in assembling the sets of bars 5a and 5b into the grid arrangement. Pawls or hooks 19 are punched in the sides of the slots 12 on a predetermined pitch and register with holes 21 punched into the bars 5. The pawls 19 and holes 21 lock the intersecting sets of bars 5a and 5b into the grid arrangement assisting the assembly thereof. Nodules or fingers 23 are lanced on a predetermined pitch and provide a groove into which a slotted bar fits to maintain a uniform spacing of one set of bars with respect to the other. The adjacent bars 5 within a set are of different lengths and different hands, the different lengths being required to accommodate the round configuration of the grid 2 and the different hands being required to accommodate the tubes being supported on opposite sides by resilient and stiff offset portions 9 and 11.

The ends of the sets of bars 5a and 5b fit, respectively, into slots 25 and 27 disposed in rings 29 and 31. The rings 29 and 31 each have a rectangular cross-section and the outside portions of the rings 29 and 31 contact ring 33, also of rectangular cross-section. Bolts 35 or other fasteners connect the rings 29 and 31 to the ring 33 to lock the bars 5a and b into a grid support 3.

To strengthen the grid 3, diametrically disposed wide or square bars 36 and 37 fit in wide slots 38 and 39, respectively, disposed in the sets of bars 5a and 5b and into an opening 40 in the rings 29 and 31 and may extend into an opening in the ring 33 (not shown). The bars 36 and 37 and slots 38 and 39 are aligned with diametric lines and the bars 36 and 37 are disposed at an angle of 90° with respect to each other.

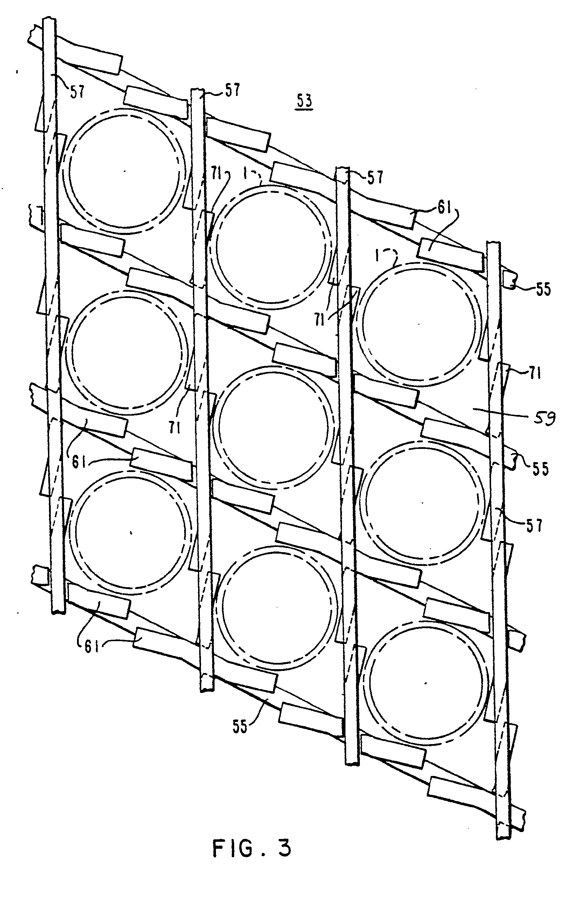

As shown in Figure 3, a tube support grid 53 for tubes 1 disposed on a triangular pitch comprises a first set of generally parallel flat bars 55 and a second set of generally parallel flat bars 57 disposed at an angle with respect to each other to form a plurality of diamond-shaped enclosures 59 for the tubes 1.

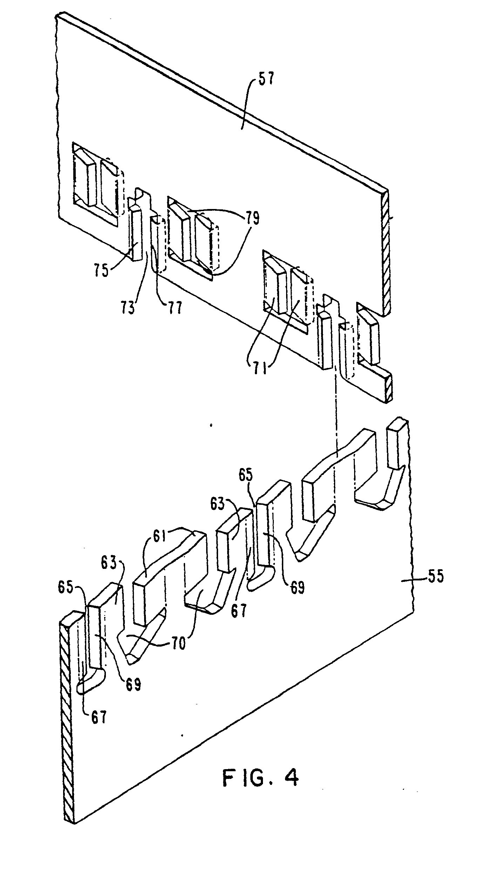

The bars 55, as shown best in Figure 4, are punched to provide a plurality of cantilever-like beam portions 61 adjacent one margin of the bar 55. The cantilever-like beam portions 61 extend out from a common stem forming a T-shaped portion, the ends of the cross of which are offset in opposite directions on opposite sides of the bar 55. The bar 55 also has short cantilever-like beam portions 63 adjacent the one margin with their free ends adjacent the free ends of the cantilever-like beam portion 61 and offset to the opposite side of the bar as the adjacent cantilever-like beam portion 61. Slots 65 also extend from the one margin into the bar 55 and the slots 65 have margins 67 and 69 which are offset in opposite directions to allow for the angular relationship with the bars 57. Clearance holes 70 are punched in the bars 55 to make it easier to offset the portions 61 and 63.

The bars 57 are punched to provide a plurality of cantilever-like beam portions 71 which are disposed inboard of the margins of the beam 57 and are so disposed that the free ends of two cantilever-like beam portions 71 are adjacent each other and are offset toward opposite sides of the bar 57. The bars 57 also have slots 73 extending from the margin of the bar 57 and the slots 73 have margins 75 and 77 which are offset in opposite directions to allow for the angular relationship with the bars 55. Clearance holes 79 are punched in the bars 57 to make it easier to offset the beam portions 71.

The ends of the bars 55 and 57 are treated in the same manner as the ends of the sets of bars 5a and 5b as mentioned hereinbefore and have square bars and slots for strengthening the grid 53. However, the ends of the bars 55 and 57 and the square bars and slots therefor are not shown.

The tube support grids hereinbefore described advantageously provide raised or offset portions of bars so arranged to prevent damage to the tubes and maintain overall structural integrity of the support grid even in the event of several different corrosion processes.

**Claims**

1. A tube support grid (3) for supporting a plurality of closely packed tubes (1), said tube support grid (3) comprising a first set (5a) and a second set (5b) of generally parallel interleaved flat bars (5) disposed at an angle with respect to one another, said bars (5) having resilient offset portions (9) which are disposed to permit contact with the tubes (1) and stiff offset portions (11) which project in opposite directions and are disposed to permit contact with the tubes (1), said offset portions (9, 11) being so arranged that the stiff and resilient offset portions (11, 9) are generally disposed on opposite sides of the tubes (1), each set of bars (5a) also having slots (13) adapted to receive the other set of bars (5b), characterised in that at least one ring (29) extends around said sets of bars (5a, 5b) and is provided with slots (25) disposed to receive the ends of said flat bars (5), said ends of said flat bars (5) being captured in said slots (25) in said ring to form the tube support grid (3), and in that the resilient offset portions (9) are adjacent one of the longitudinal margins of each of the bars (5) and the stiff offset portions (11) are inboard with respect to said longitudinal margins of the bars (5), said resilient offset portions (9) being disposed to extend from a common stem in opposite directions forming a short "T" with the ends of the resilient portion and being offset in opposite directions from the bars (5), said stems being disposed at the points of intersection of said first and second sets of interleaved flat bars and being received in the slots (13) of the intersecting flat bar, and said slots extending into said one longitudinal margin of each bar (5) only to a limited extent such that the resilient and stiff offset portions of the intersecting bars are essentially in a plane while the other longitudinal margins of said flat bars project from said grid in opposite directions.

2. A tube support grid as claimed in claim 1, characterized in that the angle at which the sets of bars are disposed is generally 90°.

3. A tube support grid as claimed in claims 1 or 2, characterized in that the open ends of the slots (13) are chamfered (at 17) and at intervals a pawl (19) is disposed on at least one side wall of such slot (13) and the bars (5) have a hole (21) disposed at predetermined intervals so as to mate with the pawl to lock mating bars (5) into engagement with one another.

4. A tube support grid as claimed in claims 1, 2 or 3, characterized in that a pair of nodules (23) are disposed at regular intervals on the bars (5) so as to receive therebetween the intersecting bars (5) thereby to maintain a uniform spacing of the bars (5) with respect to each other.

5. A tube support grid as claimed in any of claims 1 to 4, characterized in that two slotted rings (29, 31) surround said bars (5), one for each set of parallel bars (5), each of the slotted rings (29, 31) having a rectangular cross-section and being mounted on an outer ring (33) also having a rectangular cross-section.

6. A tube support grid as claimed in any of claims 1 to 5, characterized in that wide slots (38) are in the flat bars (5), the wide slots (38) being aligned with a diametric line extending across the grid and extending into the flat bars (5) longitudinal margin opposite the longitudinal margin having the resilient offset portions and that wide bars (36) are disposed in said wide slots (38) and extend generally at an angle of 90° with respect to said flat bars (5).

**Patentansprüche**

1. Rohrhaltegitter (3) zur Halterung einer Vielzahl dichtgepackter Rohre (1), wobei das Rohrhaltegitter (3) eine erste Gruppe (5a) und eine zweite Gruppe (5b) von jeweils im wesentlichen parallelen, ineinandergreifenden flachen Stäben (5) aufweist, die unter einem Winkel zueinander verlaufen, wobei weiter die Stäbe (5) jeweils elastische, versetzte Abschnitte (9), die so angeordnet sind, daß sie mit den Rohren (1) in Anlage kommen können, und steife versetzte Abschnitte (11) aufweisen, die in entgegengesetzten Richtungen vorspringen und so angeordnet sind, daß sie mit den Rohren (1) in Anlage kommen können, wobei die versetzten Abschnitte (9, 11) so angeordnet sind, daß die steifen und die elastischen versetzten Abschnitte (11, 9) etwa an den gegenüberliegenden Seiten der Rohre (1) gelegen sind, und wobei jede Gruppe von Stäben (5a) außerdem Schlitze (13) zur Aufnahme der anderen Gruppe von Stäben (5b) aufweist, dadurch gekennzeichnet, daß mindestens ein Ring (29) um die Stabgruppen (5a, 5b) herumverläuft und mit Schlitzen (25) zur Aufnahme der Enden der flachen Stäbe (5) versehen ist, wobei die Enden der flachen Stäbe (5) in den Schlitzen (25) des Ringes verankert sind, um das Rohrhaltegitter (3) zu bilden, und daß die elastischen versetzten Abschnitte (9) jeweils an einem der Längsränder jedes der Stäbe (5) angeordnet und die steifen versetzten Abschnitte (11) jeweils einwärts mit Bezug auf die Längsränder der Stäbe (5) angeordnet sind, wobei die elastischen versetzten Abschnitte (9) außerdem in entgegengesetzten Richtungen von einem gemeinsamen Schaft wegragen, der mit den Enden der elastischen Abschnitte ein kurzes "T" bildet, und nach entgegengesetzten Seiten von den Stäben (5) versetzt sind, und wobei die Schäfte jeweils an den Kreuzungsstellen zwischen den beiden ineinandergreifenden Gruppen flacher Stäbe angeordnet sind und in den Schlitzen (13) des jeweils kreuzenden Stabes aufgenommen werden, und daß die Schlitze in den genannten einen Längsrand jedes Stabes (5) nur in begrenztem Maße hineinragen, so daß die elastischen und steifen versetzten Abschnitte der kreuzenden Stäbe im wesentlichen in einer Ebene liegen, während die anderen Längsränder der flachen Stäbe nach entgegengesetzten Seiten des Gitters weisen.

2. Rohrhaltegitter nach Anspruch 2, dadurch gekennzeichnet, daß der Winkel, unter welchem die Stabgruppen angeordnet sind, etwa 90° beträgt.

3. Rohrhaltegitter nach Anspruch 1 oder 2, dadurch gekennzeichnet, daß die offenen Enden der Schlitze (13) abgeschrägt (bei 17) sind und daß in gewissen Abständen mindestens an einer Seitenwand des betreffenden Schlitzes (13) eine Nase (19) gebildet ist und die Stäbe (5) in bestimmten Intervallen eine Öffnung (21) aufweisen, welche die Nase aufnimmt, um die Stäbe (5) in Eingriff miteinander arretieren.

4. Rohrhaltegitter nach einem der Ansprüche 1, 2 oder 3, dadurch gekennzeichnet, daß in regelmäßigen Intervallen jeweils zwei Noppen (23) an den Stäben (5) angeordnet sind, um zwischen sich kreuzende Stäbe (5) aufzunehmen und dadurch einen gleichmäßigen gegenseitigen Abstand der Stäbe aufrechtzuerhalten.

5. Rohrhaltegitter nach einem der Ansprüche 1 bis 4, dadurch gekennzeichnet, daß zwei geschlitzte Ringe (29, 31) die Stäbe (5) umgeben, nämlich einer für jede Gruppe von parallelen Stäben (5), wobei jeder der geschlitzten Ringe (29, 31) einen rechteckigen Querschnitt aufweist und an einem äußeren Ring (33) befestigt ist, der ebenfalls einen rechteckigen Querschnitt hat.

6. Rohrhaltegitter nach einem der Ansprüche 1 bis 5, dadurch gekennzeichnet, daß in den flachen Stäben (5) breite Schlitze (38) vorgesehen sind, wobei diese breiten Schlitze (38) längs einer über das Gitter verlaufenden diametral Linie fluchtend angeordnet und jeweils in dem Längsrand der flachen Stäbe (5) gebildet sind, der dem die elastischen versetzten Abschnitte aufweisenden Längsrand gegenüberliegt, und daß breite Stäbe (36) in die breiten Schlitze (38) eingreifen und mit den flachen Stäben (5) einen Winkel von etwa 90° bilden.

### Revendications

1. Grille support (3) pour faisceaux de tubes, destinée à supporter une pluralité de tubes étroitement rassemblés (1), cette grille support (3) pour tubes comprenant un premier groupe (5a) et un deuxième groupe (5b) de barres plates entrecroisées (5) généralement parallèles, formant un certain angle l'un par rapport à l'autre, ces barres (5) comprenant des parties décalées élastiques (9) qui sont disposées pour permettre un contact avec les tubes (1) et des parties décalées rigides (11) qui se prolongent en sens contraires et sont disposées pour permettre un contact avec les tubes (1), ces parties décalées (9, 11) étant aménagées de telle façon que les parties décalées rigides et élastiques (11, 9) sont généralement disposées de chaque côté des tubes (1), chaque groupe de barres (5a) comportant également des encoches (13) prévues pour recevoir l'autre groupe de barres (5b), cette grille support étant caractérisée en ce qu'au moins une couronne (29) entoure ces groupes de barres (5a, 5b) et est dotée d'encoches (25) prévues pour recevoir les extrémités des barres plates (5), ces extrémités des barres plates (5) étant emprisonnées dans les encoches (25) de la couronne afin de former la grille support (3) de tubes, et en ce que les parties décalées élastiques (9) sont contiguës à l'un des bords longitudinaux de chacune des barres (5) tandis que les parties décalées rigides (11) sont situées à l'intérieur par rapport aux bords longitudinaux des barres (5), les parties décalées élastiques (9) étant disposées pour se prolonger en sens contraires à partir d'un tronc commun formant un "T" court avec les extrémités de la partie élastique et étant décalées en sens contraires à partir des barres (5), les troncs étant disposés aux points d'intersection du premier et du deuxième groupes de barres plates entrecroisées et étant reçus dans les encoches (13) de la barre plate entrecroisée, et les encoches ne se prolongeant dans un bord longitudinal de chaque barre (5) que sur une distance limitée telle que les parties décalées élastiques et rigides des barres entrecroisées se trouvent sensiblement dans un plan tandis que les autres bords longitudinaux des barres plates se prolongent en sens contraires à partir de la grille.

2. Grille support pour faisceaux de tubes suivant la revendication 1, caractérisée en ce que l'angle sous lequel sont disposés les groupes de barres est généralement égal à 90°.

3. Grille support pour faisceaux de tubes suivant l'une des revendications 1 ou 2, caractérisée en ce que les extrémités ouvertes des encoches (13) sont chanfreinées (en 17), et en ce qu'un cliquet (19) est disposé de distance en distance sur au moins une paroi latérale de l'encoche (13), et en ce que les barres (5) présentent des trous (21) disposés à intervalles prédéterminées pour correspondre avec les cliquets afin de bloquer les barres correspondantes (5) engagées les unes dans les autres.

4. Grille support pour faisceaux de tubes suivant les revendications 1, 2 ou 3, caractérisée en ce que des paires de languettes (23) sont prévues à intervalles réguliers sur les barres (5) pour recevoir entre elles les barres entrecroisées (5) de manière à maintenir un écartement uniforme des barres (5) les unes par rapport aux autres.

5. Grille support pour faisceaux de tubes suivant l'une quelconque des revendications 1 à 4, caractérisée en ce que deux couronnes (29, 31) présentant des encoches entourent les barres (5), à raison d'une couronne par groupe de barres (5), chacune de ces couronnes (29, 31) à encoches ayant une forme rectangulaire en section droite et étant montée sur une couronne extérieure (33) qui a également une section droite rectangulaire.

6. Grille support pour faisceaux de tubes suivant l'une quelconque des revendications 1 à 5, caractérisée en ce que de larges encoches (38) sont formées dans les barres plates (5), ces larges encoches (38) se trouvant dans l'alignement d'un axe diamétral traversant la grille et se prolongeant dans le bord longitudinal des barres plates (5) qui est opposé au bord longitudinal comportant les parties décalées élastiques, et en ce que des barres rectangulaires (36) sont emboîtées dans ces larges encoches (38) et forment généralement un angle de 90° par rapport aux barres plates (5).

FIG. I

FIG. 2

FIG. 3

FIG. 4